# FASCICULE DE BREVET EUROPEEN

(11) **EP 2 045 152 B1**
(45) Date de publication et mention de la délivrance du brevet: **05.01.2011**
(21) Numéro de dépôt: 08165690.2
(22) Date de dépôt: 02.10.2008
(51) Int. Cl.: B60S 1/20

(54) **Dispositif d'entraînement avec des mouvements déphasés des balais d'un essuie glace de véhicule automobile**
Antriebsvorrichtung mit phasenversetzten Bewegungen der Wischblätter eines Scheibenwischers für Kraftfahrzeuge
Device for powering offset movements of the blades of an automobile windscreen wiper

(30) Priorité: 02.10.2007 FR 0758014
(43) Date de publication de la demande: 08.04.2009
(73) Titulaire: PEUGEOT CITROËN AUTOMOBILES S.A., 78140 Vélizy Villacoublay (FR)
(72) Inventeur: Jeuffe, Gérard, 78580 Bazemont (FR); Kuttler, Romain, 70400 Bussurel (FR)

(56) Documents cités:
- DE-B- 1 214 067
- GB-A- 2 085 713
- JP-A- 60 197 450

## Description

La présente invention est relative à un dispositif propre à entraîner les deux balais d'un essuie glace de véhicule automobile avec des mouvements de rotation alternés en créant un déphasage dans leurs déplacements mutuels contre la surface d'une paroi vitrée, en particulier celle du pare brise avant du véhicule ou de sa lunette arrière.

Les balais d'essuie glace classiques comportent généralement un support pour un bras oscillant, portant à son tour, directement ou par l'intermédiaire d'un ensemble à ressorts qui appuie sur la surface de la paroi vitrée, une raclette souple qui enlève l'eau et les salissures déposées sur cette dernière.

Ce support du bras oscillant est solidaire d'un axe d'entraînement animé d'un mouvement de rotation alternatif dans un sens, puis dans l'autre, au moyen d'au moins un moteur de commande dont l'arbre de sortie est confondu ou solidarisé avec cet axe.

En règle générale, en particulier dans le cas du pare brise avant du véhicule devant lequel se déplacent, il convient que les déplacements de ces derniers soient coordonnés afin d'éviter que leurs mouvements propres n'interfèrent, ce qui risquerait de les bloquer mutuellement, ces déplacements étant réalisés en créant un déphasage convenable dans le mouvement des raclettes souples qu'ils supportent. Ce déphasage peut être obtenu, soit par une timonerie mécanique reliant les deux bras, de sorte que leurs déplacements soient assurés à partir d'un moteur unique entraînant ces balais simultanément mais de façon décalée, soit au moyen de deux moteurs distincts pilotant chacun un balai avec un déphasage dans le temps approprié, l'un des balais étant en avance sur l'autre dans leurs trajets respectifs, tout en étant pratiquement en contact mutuel au départ et à la fin de leurs courses respectives.

Dans le premier cas, la solution est encombrante et conduit en particulier à occuper avec la timonerie reliée aux deux bras afin de les entraîner selon une séquence appropriée, une large partie de l'espace disponible en avant de ces balais, au droit du bord du capot qui ferme le compartiment contenant le moteur du véhicule.

Dans l'autre, la solution à deux moteurs est coûteuse, chaque moteur occupant en outre un espace qui n'est pas non plus négligeable.

Pour pallier ces inconvénients, on a déjà envisagé d'assurer le déphasage nécessaire entre les mouvements simultanés des deux balais en contact avec la surface vitrée à partir d'un moteur d'entraînement unique, agissant sur deux câbles souples opposés, aptes à entraîner séparément l'un et l'autre de ces balais, chacun de ces câbles, pouvant travailler successivement en traction puis en poussée lors de chacune des courses alternées du balai qu'il commande contre la surface, permettant de provoquer les rotations correspondantes de ces balais en les faisant pivoter chacun individuellement autour d'un axe fixe, porté par l'habitacle du véhicule.

Le brevet japonais 60 - 197450 illustre une réalisation de ce genre, dont la structure mécanique est complexe et dont la fiabilité est de ce fait contestable.

Pour perfectionner cette solution déjà connue, on a également prévu de faire varier le décalage dans le temps des mouvements des deux balais, de telle sorte que les angles formés à un instant donné par chacun de ceux-ci avec une ligne de référence commune, au cours de leurs rotations alternées contre la surface vitrée, soient en permanence différents, sauf dans la position initiale et finale de ces balais, au début et à la fin de leurs courses respectives.

Ainsi, au départ, les deux balais sont de préférence approximativement horizontaux et sensiblement en contact l'un et l'autre avec la base du pare brise. Au cours du cycle, le déplacement d'un des balais est commandé par le câble associé de telle sorte que l'angle formé par ce balai avec la ligne de référence choisie, par exemple une droite horizontale, augmente plus rapidement que celui formé par l'autre balai avec cette même ligne, en les décalant ainsi mutuellement selon une loi déterminée.

Notamment, pour le premier balai, cet angle croît dans la première partie de sa course plus vite que celui du second balai entraîné simultanément par l'intermédiaire de son propre câble, puis moins rapidement dans la seconde partie de sa course alors que le contraire se produit pour l'autre balai, de sorte qu'en fin de course, après une rotation dont l'amplitude globale peut être de l'ordre de 90° ou plus, les deux balais occupent des positions sensiblement symétriques par rapport au plan médian du pare brise, en formant des angles identiques avec la ligne de référence.

Grâce au décalage ainsi créé dans leurs courses respectives entre leur position initiale et leur position finale, les deux balais ne peuvent pas se rencontrer durant celles-ci et le cas échéant se bloquer mutuellement, leurs mouvements relatifs ne pouvant interférer ensemble.

La présente invention fait intervenir une autre conception du mécanisme qui actionne les mouvements de rotation alternée des deux balais, le décalage dans le temps de leurs positions respectives au cours de leurs déplacements contre la surface vitrée étant obtenu, non plus en jouant sur leur positionnement relatif en fonctionnement, mais sur leur vitesse d'entraînement propre autour des axes respectifs autour desquels tournent ces balais.

A cet effet, le dispositif considéré, pour l'entraînement en rotation alternée avec des mouvements déphasés des deux balais d'un essuie glace de véhicule automobile à partir de deux câbles souples, ou des deux brins opposés d'un même câble, aptes à entraîner séparément, par un effort de traction puis de poussée ou vice versa, l'un et l'autre respectivement de ces balais contre une surface vitrée de ce véhicule, le déplacement de chaque câble souple provoquant la rotation d'un organe de commande du pivotement d'un des balais autour d'un axe porté par un palier de support fixe, se caractérise en ce que l'axe de pivotement de chaque balai et l'organe de commande sont reliés par une biellette de liaison par rapport à laquelle tourillonne l'axe de pivotement, cet organe de commande étant solidarisé d'un doigt excentré porté par la biellette et décalé radialement par rapport au centre de rotation de l'organe de commande, de telle sorte que l'entraînement de cet organe par le câble souple assure, par l'intermédiaire du doigt excentré, le déplacement de la biellette de liaison qui provoque à son tour la rotation de l'axe de pivotement du balai avec une vitesse qui varie dans le temps en fonction de la distance qui sépare le doigt excentré d'une ligne de référence fixe passant par le point de l'organe de commande sur lequel s'exerce l'effort d'entraînement du câble.

Dans une telle configuration, le balai entraîné en rotation alternée par l'organe de commande, via la biellette de liaison et le doigt excentré, voit sa vitesse augmenter puis diminuer (ou inversement), entre sa position initiale et sa position finale au cours de son déplacement au contact de la surface vitrée, la vitesse du second balai variant simultanément mais de manière opposée, en assurant le décalage souhaité de ces balais dans leurs déplacements respectifs contre la surface vitrée sur laquelle ils s'appliquent.

Avantageusement et conformément à une autre caractéristique du dispositif selon l'invention, les biellettes de liaison des organes de commande des axes de pivotement des deux balais sont respectivement calées dans des positions différentes de sorte que la vitesse d'entraînement d'un de ces balais augmente pendant que la vitesse de l'autre diminue ou vice versa, lors des rotations de leurs organes de commande provoquées par les déplacements des deux câbles.

Dans un mode de réalisation particulier du dispositif de l'invention, l'organe de commande de l'axe de pivotement de chaque balai est constitué par un pignon denté, le câble souple provoquant la rotation de cet organe de commande comportant une crémaillère solidarisée de ce câble et en prise avec ce pignon.

De préférence, la crémaillère est mobile dans une glissière de guidage prévue dans le palier de support fixe de l'axe de pivotement du balai.

Selon le cas, la crémaillère et le pignon comportent des dents rectilignes s'étendant perpendiculairement à la direction longitudinale du câble. En variante, le câble peut présenter dans sa surface externe une structure crantée, continue, en prise avec le pignon denté.

Avantageusement et dans ce dernier cas, la structure crantée du câble peut prendre la forme d'une spirale continue à profil hélicoïdal ou en développante de cercle, s'enroulant autour du câble, le pignon comportant des dents de profil complémentaire.

Dans une réalisation différente mais équivalente, l'organe de commande de l'axe de pivotement de chaque balai est constitué par une poulie circulaire, comportant une gorge périphérique dans laquelle s'enroule le câble souple, l'extrémité de ce câble étant solidarisée d'un taquet d'ancrage sur la poulie.

Dans un autre mode de réalisation, chaque biellette de liaison présente la forme d'un tiroir oscillant, muni d'une rainure transversale recevant un pion solidaire de l'organe de commande entraîné en rotation par le câble souple, ce tiroir oscillant étant guidé en translation dans une glissière fixe, s'étendant perpendiculairement à la direction de la rainure et propre à accommoder les débattements de l'organe de commande autour de l'axe de pivotement du balai, consécutivement au déplacement du pion dans cette rainure.

Selon une caractéristique complémentaire, la glissière fixe comporte une fente latérale à travers laquelle passe le câble souple pour entraîner en rotation l'organe de commande.

D'autres caractéristiques d'un dispositif d'entraînement conforme à l'invention apparaîtront encore à travers la description qui suit de divers exemples de réalisation, donnés à titre indicatif et non limitatif, en référence aux dessins annexés, sur lesquels :
- La Figure 1 est une vue schématique, illustrant l'ensemble formé par les deux balais d'essuie glace d'un véhicule automobile à mouvements de rotation déphasés, chacun de ces balais étant équipé d'un dispositif d'entraînement selon l'invention.
- La Figure 2 est un diagramme portant en ordonnées l'angle correspondant à la position de chacun des deux balais contre une surface vitrée du véhicule et en abscisses le temps, illustrant le déphasage imposé à chacun de ces balais par le dispositif de l'invention afin d'éviter leur collision lors de leurs mouvements de rotation alternés respectifs.
- la Figure 3 est une vue en perspective d'un premier mode de réalisation du dispositif, illustrant l'organe de commande de l'axe de pivotement d'un des balais.
- Les Figures 4a, 4b, et 4c sont des vues partielles de l'organe de commande et de la biellette portant le doigt excentré provoquant l'entraînement de l'axe de pivotement, la Figure 4a représentant le mécanisme envisagé lorsque la vitesse de rotation de l'axe de sortie de celui-ci est minimale, tandis que les Figures 4b et 4c illustrent les calages initiaux des deux balais, déphasés mutuellement de 90°, permettant d'obtenir une variation de vitesse de ces deux balais symétrique avec le même angle de balayage.
- La Figure 5 illustre une variante de réalisation de l'organe de commande.
- Les Figures 6a, 6b et 6c sont des vues d'un autre mode de réalisation de l'organe de commande, illustré dans trois positions successives.

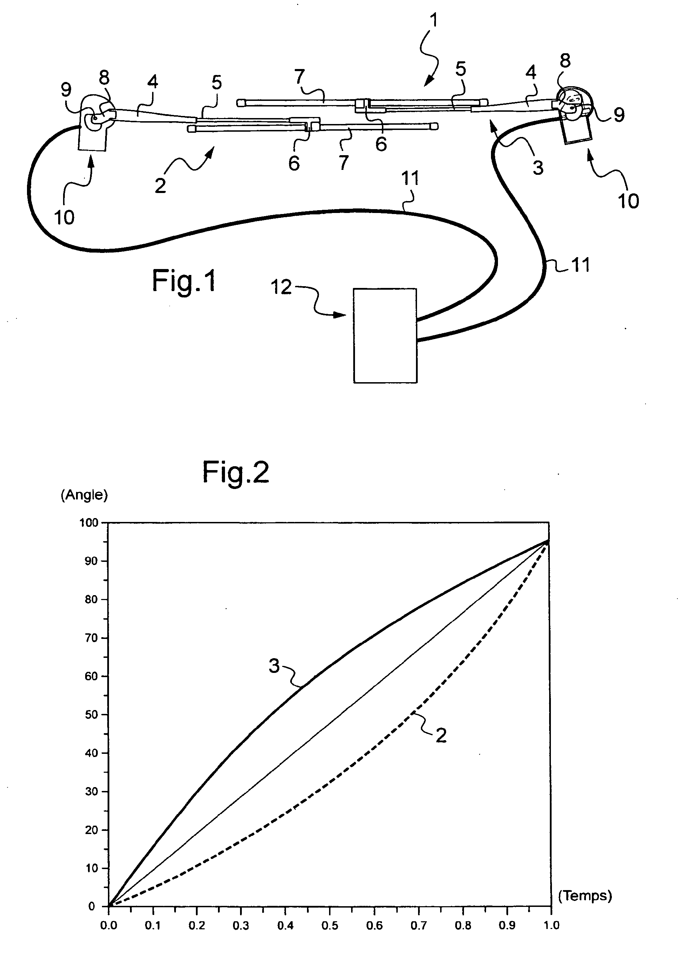

Sur la Figure 1, la référence 1 désigne un ensemble pour le balayage d'une surface vitrée d'un véhicule automobile, notamment de son pare brise avant (non représenté), constitué au moyen de deux balais, respectivement 2 et 3, agencés pour être entraînés contre cette surface avec des déplacements selon un mouvement de rotation alterné.

Chacun des balais 2 et 3 comporte, de façon en elle-même bien connue dans la technique, un bras pivotant 4, prolongé par une tige 5, munie d'un moyen d'appui 6 contre la surface vitrée à balayer d'une raclette souple 7, le détail de la réalisation de ces balais n'important pas directement à l'invention.

Notamment, selon deux variantes les plus usuellement mises en oeuvre, les moyens d'appui 6 de la raclette 7 sur la surface peuvent être constitués d'un ensemble à ressorts qui exerce sur cette raclette une pression d'appui appropriée, ou bien découler de la structure même de la raclette qui comporte dans ce cas une lèvre souple, solidaire d'une armature flexible assurant l'effort d'application nécessaire.

Le bras pivotant 4 de chacun des balais est articulé sur un élément de support 8 afin de permettre de le faire tourner par rapport à celui-ci en l'écartant de la surface vitrée, en particulier pour entretien ou remplacement de la raclette souple 7.

Chacun des éléments de support 8 des deux balais 2 et 3 est lui-même solidarisé d'un axe tournant 9, permettant au balai correspondant de subir un mouvement de rotation alterné sous l'effet d'un dispositif d'entraînement 10 conforme à l'invention et dont la description détaillée est donnée ci-après selon diverses variantes de réalisation.

Chacun de ces dispositifs d'entraînement 10 est actionné à l'aide d'un câble souple 11, les deux câbles étant réunis ensemble à un mécanisme de commande 12 permettant, à partir de l'entraînement assuré par un moteur unique (non représenté), de provoquer leurs mouvements propres, réalisant respectivement, par l'intermédiaire du dispositif d'entraînement 10 qui leur est associé, les déplacements simultanés en rotation alternée des deux balais 2 et 3 avec un déphasage approprié, de telle sorte que, au cours du balayage de la surface vitrée qu'ils réalisent, tout risque de collision entre eux soit évité.

En variante, on peut envisager de commander les deux balais à partir des deux brins opposés d'un câble unique.

De préférence, chaque câble souple ou brin de câble associé à un des balais est guidé dans son trajet entre le dispositif d'entraînement 10 et le mécanisme de commande 12 à l'intérieur d'une gaine de maintien (non représentée), permettant, à partir de ce mécanisme de commande, d'exercer sur le câble un effort de poussée ou de traction transmis au dispositif d'entraînement 10 de chacun des balais 2 ou 3 pour provoquer la rotation alternée de celui-ci.

Le diagramme de la Figure 2 illustre le déphasage imposé aux deux balais 2 et 3 respectivement prévus, dans le cas du pare brise avant du véhicule, en regard du conducteur et de son passager, ce diagramme portant le temps en abscisses et en ordonnées l'angle formé par chacun de ces balais avec une ligne de référence fixe, par exemple une droite horizontale.

Au départ d'un cycle de rotation de chacun des balais autour de son axe de pivotement 9, commandé par le dispositif d'entraînement 10 sous l'effet du câble 11 associé à celui-ci, ces deux balais sont sensiblement horizontaux et approximativement en contact avec la base du pare brise, dans la position illustrée sur la Figure 1.

Dans l'exemple considéré et au cours de ce cycle, la croissance de l'angle formé par le balai 3 avec une ligne de référence fixe, notamment une droite horizontale, augmente progressivement dans la première partie de la course de ce balai puis ralentit ensuite, tandis que l'angle du balai 2 avec la même ligne de référence, croît puis diminue simultanément mais de façon sensiblement inverse de celle du premier balai, de sorte que les deux balais forment à la fin du cycle le même angle avec la ligne de référence, en étant ainsi symétriques l'un de l'autre.

Selon l'invention, ce déphasage entre les deux balais est réalisé en faisant varier respectivement leurs vitesses propres d'entraînement de telle sorte que, à partir d'une position initiale commune, l'un de ces balais soit en avance sur l'autre balai avec un écart qui croît d'abord puis diminue ensuite jusqu'à ce que ces deux balais, en position finale, soient symétriques.

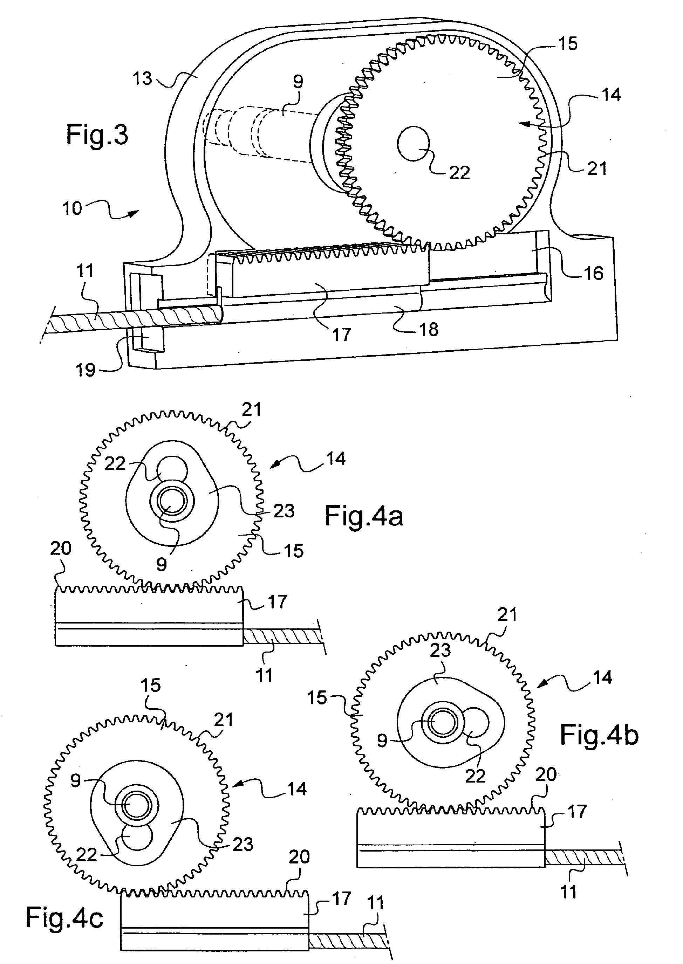

La Figure 3 illustre un premier mode de réalisation du dispositif d'entraînement 10 assurant la mise en rotation alternée de l'axe de pivotement 9 d'un des balais de l'essuie glace, à partir du câble 11 associé à ce balai, exerçant un effort de traction ou de poussée approprié.

Dans ce mode de réalisation, le dispositif comporte un palier de support fixe 13 et un organe de commande 14 qui est dans ce cas constitué par un pignon circulaire 15, le centre de rotation de ce pignon étant disposé sur une horizontale coupant l'axe de pivotement 9 du balai correspondant.

Le palier de support 13 comporte intérieurement une glissière 16 dans laquelle est susceptible de se déplacer une crémaillère 17, munie d'une pince 18 permettant de la solidariser de l'extrémité du câble 11 qui traverse une ouverture 19 ménagée dans le côté correspondant du palier, de telle sorte que, selon que ce câble exerce un effort de traction ou de poussée, la crémaillère 17 se déplace vers la gauche ou vers la droite à l'intérieur de la glissière 16.

La crémaillère 17 est munie de dents 20 rectilignes, propres à engrener avec des dents complémentaires également rectilignes 21, ménagées à la périphérie du pignon 15 constituant l'organe de commande 14.

Selon l'invention, le pignon denté 15 comporte un alésage cylindrique accueillant un doigt 22, excentré par rapport au centre de rotation du pignon, et par conséquent vis-à-vis de l'axe de pivotement 9 du balai associé. Ce doigt 22 est solidaire d'une biellette de liaison 23, disposée de l'autre côté du pignon denté 15 sur la Figure 3 et par conséquent non visible sur celle-ci, mais qui apparaît sur les Figures 4a, 4b et 4c où ce pignon est vu du côté opposé.

La biellette 23 est solidaire de l'axe de pivotement 9 du balai porté par le palier de support fixe 13.

Les Figures 4a, 4b et 4c illustrent la biellette 23 dans trois positions successives imposées par le déplacement de la crémaillère 17 sous l'effet du câble 11 associé, réalisant l'entraînement de l'axe de pivotement 9 et la rotation correspondante du balai porté par celui-ci. Ces Figures illustrent notamment le calage initial de l'ensemble formé par l'axe de pivotement 9, le palier de support 13, le pignon denté 15 et le doigt 22.

Du fait de l'excentration du doigt 22 par rapport à l'axe du pignon denté 15 de l'organe de commande 14, on comprend aisément que la vitesse de rotation imposée à l'axe de pivotement 9 du balai par la biellette 23, varie dans le temps au fur et à mesure de la rotation propre de ce pignon autour de son centre, imposée par le déplacement transversal de la crémaillère 17 dont les dents 20 engrènent en permanence avec les dents complémentaires 21 du pignon.

Ainsi et dans une telle configuration, le balai concerné, entraîné par son axe de pivotement 9, aura au départ, à partir de sa position initiale, une vitesse qui sera plus élevée dans la première phase du cycle, cette vitesse diminuant dans la seconde phase avant que le balai n'atteigne la position finale de sa course.

Par un calage initial différent de l'autre balai vis-à-vis de son organe de commande, la vitesse d'entraînement de ce balai sera choisie de manière différente et notamment inverse, ce balai subissant un démarrage lent avec une vitesse plus réduite dans la première partie du cycle, puis une accélération dans la seconde partie, en réalisant le déphasage souhaité des deux balais, avant que ces derniers, partant d'une position initiale identique, n'atteignent en fin de course une position finale où ils sont symétriques l'un de l'autre comme déjà exposé.

La distance d'excentration imposée par construction entre le doigt 22 et la direction de l'axe de pivotement 9 de chaque balai, définie par les dimensions de la biellette de liaison 23, est impérativement identique à l'excentration entre l'axe du pignon denté 15 et le doigt 22, mais peut être différente pour les deux balais, si l'angle à balayer par chacun d'eux n'est pas le même, de telle sorte que ces balais soient convenablement décalés au cours de leurs trajets respectifs du fait de leurs vitesses propres différentes, ces balais partant d'une position initiale et atteignant une position finale où leurs vitesses deviennent nulles.

A noter que ce dispositif permet de faire varier de façon simple la vitesse de rotation de chacun des axes de pivotement 9 des deux balais 2 et 3 en fonction de la distance qui sépare le doigt excentré 22 d'une ligne de référence fixe qui, dans l'exemple de réalisation considéré, passe par le point de l'organe de commande 14 sur lequel s'exerce l'effort d'entraînement du câble 11, en l'espèce le point de tangence du pignon 15 avec la direction de ce câble, parallèle à la direction de déplacement de la crémaillère 17 dans sa glissière rectiligne 16.

Dans l'exemple de réalisation décrit ci-dessus, l'organe de commande 14 est donc constitué par le pignon denté 15, engrenant avec la crémaillère rectiligne 17.

A noter que, au lieu d'utiliser une crémaillère de ce type, solidarisée de l'extrémité du câble d'entraînement et dont les dents droites coopèrent avec des dents également rectilignes du pignon de l'organe de commande, on peut prévoir, selon une solution équivalente (non représentée), de réaliser directement le câble avec une structure crantée, continue, en prise avec le pignon.

Cette structure crantée peut se présenter sous la forme d'une spirale à profil hélicoïdal ou en développante de cercle, s'enroulant sur la surface extérieure du câble, le pignon denté de l'organe de commande comportant des dents de profil complémentaire.

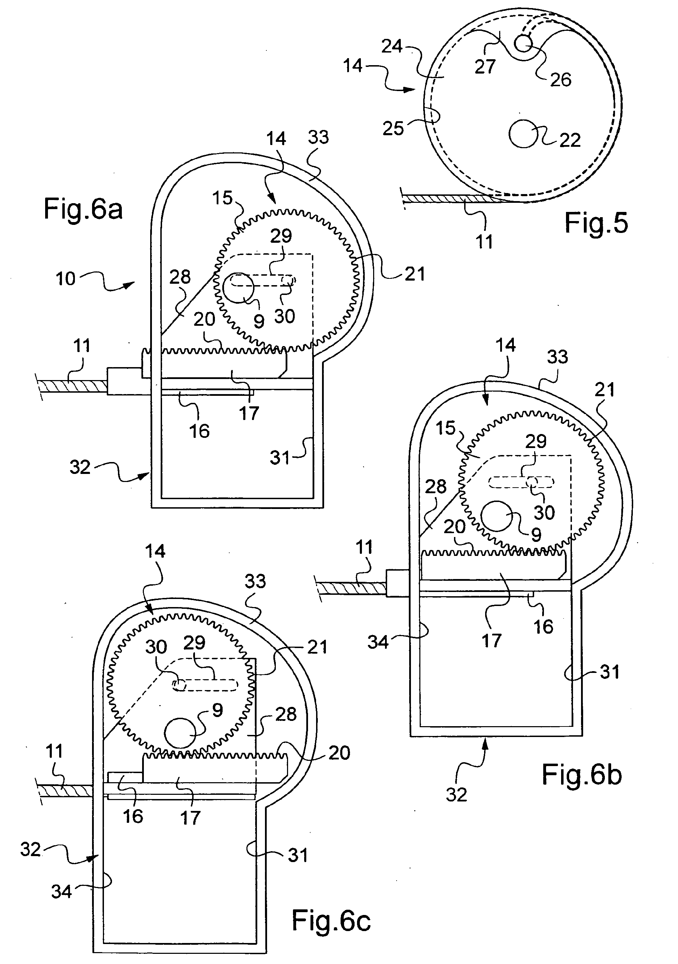

Une autre variante de réalisation particulièrement simple, illustrée sur la Figure 5, consiste à remplacer ce pignon denté par une poulie circulaire 24 comportant une gorge périphérique 25 dans laquelle s'enroule le câble souple 11, l'extrémité de ce câble étant solidarisée d'un taquet 26 réalisant son ancrage sur la poulie dans une réserve 27 prévue à cet effet dans le bord de la gorge.

Dans encore un autre mode de réalisation, illustré sur les Figures 6a, 6b et 6c, la biellette de liaison avec l'axe de pivotement 9 du balai associé au dispositif d'entraînement 10, est modifiée et réalisée sous la forme d'un tiroir oscillant 28, muni d'une rainure transversale 29 recevant un pion 30 solidaire de l'organe de commande 14, lequel comporte, comme dans le premier mode de réalisation décrit plus haut, un pignon 15, ce pion, disposé au centre de rotation du pignon, étant excentré par rapport à l'axe de pivotement 9 et assurant ainsi la fonction du doigt excentré prévu dans ce premier mode de réalisation.

Egalement, comme dans l'exemple précédent, les dents 21 de ce pignon 15 sont en prise avec les dents complémentaires 20 de la crémaillère 17 fixée à l'extrémité du câble d'entraînement 11, qui exerce sur cette crémaillère un effort de traction ou de poussée pour la commande du balai, en la déplaçant dans sa glissière.

Dans cet exemple, le tiroir oscillant 28 est guidé en translation dans une autre glissière 31, ménagée dans un support fixe 32, cette glissière 31 s'étendant perpendiculairement à la direction de la rainure transversale 29 et par suite à celle de la glissière 16 recevant la crémaillère 17.

Le support 32 comporte, à l'opposé et dans le prolongement de la glissière 31, une extension 33 permettant d'accommoder les débattements latéraux du pignon denté 15 de l'organe de commande 14, consécutivement au déplacement du pion 30 dans la rainure transversale 29 du tiroir oscillant 28.

Une fente 34 est ménagée dans le côté du support fixe 32 pour permettre le passage du câble 11 et de la crémaillère 17 qui lui est liée, lors des mouvements d'oscillation du tiroir 28 provoqués par le déplacement du pion 30 dans sa rainure 29 par suite de la rotation du pignon 15 de l'organe de commande 14, entraîné par la crémaillère 17.

Dans ce mode de réalisation, le pion 30, fixé au centre de rotation du pignon 15, assure l'excentration nécessaire vis-à-vis de l'axe de pivotement 9 du balai, la crémaillère 17 commandée par les déplacements du câble 11 n'étant plus dans ce cas animée d'un simple mouvement de translation selon sa direction longitudinale comme dans le premier exemple décrit, mais également d'un mouvement de translation verticale, synchronisé avec la rotation de ce pignon.

Lorsque la crémaillère se déplace vers la gauche sur le dessin, le pignon tourne dans le sens horaire et aura tendance à descendre dans la glissière verticale, du fait de l'excentration du pion dont il est solidaire par rapport à l'axe de pivotement du balai, dont la direction est fixe dans ce support. Le déplacement du tiroir oscillant étant indexé par rapport au pion prévu au centre de rotation du pignon, sera identique et garantira en permanence le contact entre la crémaillère et le pignon.

Comme dans le premier exemple de réalisation, le déphasage entre les mouvements des deux balais est ici obtenu par un calage initial différent de leurs organes de commande respectifs.

On réalise ainsi un dispositif d'entraînement avec des mouvements déphasés dans le temps des deux balais d'un ensemble à essuie glace pour véhicule automobile, de conception simple et qui permet de faire varier la vitesse d'entraînement de ces balais au cours de leurs cycles de rotation alternative contre une surface vitrée de ce véhicule, ce dispositif présentant l'avantage de pouvoir convertir, de façon directe, le mouvement de translation d'un câble, lui-même déplacé à vitesse constante pour exercer l'effort de traction ou de poussée nécessaire, en un mouvement de rotation à vitesse variable des balais.

Bien entendu, il va de soi que l'invention ne se limite pas aux exemples de réalisation plus spécialement décrits et représentés mais qu'elle est uniquement limitée par le contenu des revendications attachées.

## Revendications

1. Dispositif d'entraînement en rotation alternée avec des mouvements déphasés des deux balais (2,3) d'un essuie glace de véhicule automobile à partir de deux câbles souples (11), ou des deux brins opposés d'un même câble, aptes à entraîner séparément, par un effort de traction puis de poussée ou vice versa, l'un et l'autre respectivement de ces balais contre une surface vitrée de ce véhicule, le déplacement de chaque câble souple provoquant la rotation d'un organe de commande (14) du pivotement d'un des balais autour d'un axe (9) porté par un palier de support fixe (13,32), **caractérisé en ce que** l'axe de pivotement (9) de chaque balai et l'organe de commande (14) sont reliés par une biellette de liaison (23) par rapport à laquelle tourillonne l'axe de pivotement (9), cet organe de commande étant solidarisé d'un doigt excentré (22), porté par la biellette et décalé radialement par rapport au centre de rotation de l'organe de commande, de telle sorte que l'entraînement de cet organe par le câble souple (11) assure, par l'intermédiaire du doigt excentré, le déplacement de la biellette de liaison qui provoque à son tour la rotation de l'axe de pivotement (9) du balai avec une vitesse qui varie dans le temps en fonction de la distance qui sépare le doigt excentré (22) d'une ligne de référence fixe passant par le point de l'organe de commande (14) sur lequel s'exerce l'effort d'entraînement du câble (11).

2. Dispositif selon la revendication 1, **caractérisé en ce que** les biellettes de liaison (23) des organes de commande (14) des axes de pivotement (9) des deux balais (2,3) sont respectivement calées dans des positions différentes de sorte que la vitesse d'entraînement d'un de ces balais augmente pendant que la vitesse de l'autre diminue ou vice versa, lors des rotations de leurs organes de commende (14) provoquées par les déplacements des deux câbles (11).

3. Dispositif selon l'une des revendications 1 ou 2, **caractérisé en ce que** l'organe de commande (14) de l'axe de pivotement (9) dé chaque balai est constitué par un pignon denté (15).

4. Dispositif selon la revendication 3, **caractérisé en ce que** le câble souple (11) provoquant la rotation de l'organe de commande (14) comporte une crémaillère (17) solidarisée de ce câble et en prise avec le pignon denté (15).

5. Dispositif selon la revendication 4, **caractérisé en ce que** la crémaillère (17) est mobile dans une glissière de guidage (16) prévue dans le palier de support (13) de l'axe de pivotement (9) du balai.

6. Dispositif selon l'une des revendications 4 ou 5, **caractérisé en ce que** la crémaillère (17) et le pignon (15) comportent des dents rectilignes (20,21) s'étendant perpendiculairement à la direction longitudinale du câble (11).

7. Dispositif selon la revendication 3, **caractérisé en ce que** le câble souple (11) présente dans sa surface externe une structure crantée, continue, en prise avec le pignon denté (15).

8. Dispositif selon la revendication 7, **caractérisé en ce que** la structure crantée du câble (11) se présente sous la forme d'une spirale continue à profil hélicoïdal ou en développante de cercle, s'enroulant autour du câble, le pignon (15) comportant des dents de profil complémentaire.

9. Dispositif selon l'une des revendications 1 ou 2, **caractérisé en ce que** l'organe de commande (14) de l'axe de pivotement (9) de chaque balai est constitué par une poulie circulaire (24), comportant une gorge périphérique (25) dans laquelle s'enroule le câble souple (11), l'extrémité de ce câble étant solidarisée d'un taquet d'ancrage (26) sur la poulie.

10. Dispositif selon la revendication 1, **caractérisé en ce que** chaque biellette de liaison (23) présente la forme d'un tiroir oscillant (28), muni d'une rainure transversale (29) recevant un pion (30) solidaire de l'organe de commande (14) entraîné en rotation par le câble souple (11), ce tiroir oscillant étant guidé en translation dans une glissière fixe (31), s'étendant perpendiculairement à la direction de la rainure et propre à accommoder les débattements de l'organe de commande (14) autour de l'axe de pivotement (9) du balai, consécutivement au déplacement du pion dans cette rainure.

11. Dispositif selon la revendication 10, **caractérisé en ce que** la glissière fixe (31) comporte une fente latérale (34) à travers laquelle passe le câble souple (11) pour entraîner en rotation l'organe de commande (14).

## Claims

1. Device for entrainment in alternate rotation with dephased movements of the two blades (2, 3) of a windscreen wiper of an automobile vehicle from two flexible cables (11), or the two opposite stands of the same cable, suited to entrain separately, by a tractive force then a thrust force or vice versa, one and the other respectively of these blades against a glazed surface of this vehicle, the displacement of each flexible cable causing the rotation of a control member (14) of the pivoting of one of the blades about an axis (9) carried by a fixed support bearing (13, 32), **characterized in that** the pivoting axis (9) of each blade and the control member (14) are connected by a connecting link (23) with respect to which the pivoting axis (9) rotates, this control member being integrated with an offset finger (22), carried by the link and staggered radially with respect to the centre of rotation of the control member, such that the entrainment of this member by the flexible cable (11) ensures, by means of the offset finger, the displacement of the connecting link which, in turn, causes the rotation of the pivoting axis (9) of the blade at a speed which varies in time as a function of the distance which separates the offset finger (22) from a fixed reference line passing through the point of the control member (14) on which the entrainment force of the cable (11) is exerted.

2. Device according to Claim 1, **characterized in that** the connecting links (23) of the control members (14) of the pivoting axes (9) of the two blades (2, 3) are respectively secured in different positions such that the entrainment speed of one of these blades increases, whilst the speed of the other reduces or vice versa, on the rotations of their control members (14) caused by the displacements of the two cables (11).

3. Device according to one of Claims 1 or 2, **characterized in that** the control member (14) of the pivoting axis (9) of each blade is constituted by a toothed pinion (15).

4. Device according to Claim 3, **characterized in that** the flexible cable (11) causing the rotation of the control member (14) comprises a rack (17) integrated with this cable and engaged with the toothed pinion (15).

5. Device according to Claim 4, **characterized in that** the rack (17) is movable in a guiding slide arrangement (16) provided in the support bearing (13) of the pivoting axis (9) of the blade.

6. Device according to one of Claims 4 or 5, **characterized in that** the rack (17) and the pinion (15) comprise rectilinear teeth (20, 21) extending perpendicularly to the longitudinal direction of the cable (11).

7. Device according to Claim 3, **characterized in that** the flexible cable (11) has in its external surface a continuous, serrated structure, engaged with the toothed pinion (15).

8. Device according to Claim 7, **characterized in that** the serrated structure of the cable (11) is present in the form of a continuous spiral having a helicoidal profile or in the involute of a circle, winding around the cable, the pinion (15) comprising teeth having a complementary profile.

9. Device according to one of Claims 1 or 2, **characterized in that** the control member (14) of the pivoting axis (9) of each blade is constituted by a circular pulley (24), comprising a peripheral groove (25) in which the flexible cable (11) is wound, the end of this cable being integrated with an anchoring block (26) on the pulley.

10. Device according to Claim 1, **characterized in that** each connecting link (23) has the form of an oscillating slider (28), provided with a transverse slot (29) receiving a pin (30) integral with the control member (14) entrained in rotation by the flexible cable (11), this oscillating slider being guided in translation in a fixed slide arrangement (31), extending perpendicularly to the direction of the slot and suited to accommodate the travels of the control member (14) about the pivoting axis (9) of the blade, consecutively to the displacement of the pin in this slot.

11. Device according to Claim 10, **characterized in that** the fixed slide arrangement (31) comprises a lateral slit (34) through which the flexible cable (11) passes to entrain the control member (14) in rotation.

## Patentansprüche

1. Vorrichtung zum Antreiben in abwechselnder Drehung mit phasenverschobenen Bewegungen der zwei Wischer (2, 3) eines Kraftfahrzeug-Scheibenwischers, ausgehend von zwei biegsamen Kabeln (11) oder zwei gegenüberliegenden Adern eines Kabels, die durch eine Zugkraft und dann eine Schubkraft oder umgekehrt jeweils den einen und den anderen dieser Wischer gegen eine verglaste Fläche dieses Fahrzeugs getrennt antreiben können, wobei die Bewegung jedes biegsamen Kabels die Drehung eines Steuerorgans (14) des Schwenkens eines der Wischer um eine Achse (9) bewirkt, die von einem stationären Stützlager (13, 32) getragen wird, **dadurch gekennzeichnet, dass** die Schwenkachse (9) jedes Wischers und das Steuerorgan (14) durch einen Verbindungsschwingarm (23) verbunden sind, bezüglich dem die Schwenkachse (9) dreht, wobei dieses Steuerorgan fest mit einem außermittigen Finger (22) verbunden ist, der von dem Schwingarm getragen wird und in Bezug zu der Drehmitte des Steuerorgans derart radial versetzt ist, dass das Antreiben dieses Organs durch das biegsame Kabel (11) über den außermittigen Finger das Bewegen des Verbindungsschwingarms sicherstellt, der seinerseits die Drehung der Schwenkachse (9) des Wischers mit einer Geschwindigkeit bewirkt, die zeitlich in Abhängigkeit von der Entfernung, die den außermittigen Finger (22) von einer fest stehenden Bezugslinie trennt, die durch den Punkt des Steuerorgans (14) läuft, auf den die Antriebswirkung des Kabels (11) einwirkt, variiert.

2. Vorrichtung nach Anspruch 1, **dadurch gekennzeichnet, dass** die Verbindungsschwingarme (23) der Steuerorgane (14) der Schwenkachsen (9) der zwei Wischer (2, 3) jeweils in unterschiedlichen Positionen derart verkeilt sind, dass die Antriebsgeschwindigkeit eines dieser Wischer bei den Drehungen ihrer Steuerorgane (14), die von den Bewegungen der zwei Kabel (11) veranlasst werden, steigt, während die Geschwindigkeit des anderen sinkt oder umgekehrt.

3. Vorrichtung nach einem der Ansprüche 1 oder 2, **dadurch gekennzeichnet, dass** das Steuerorgan (14) der Schwenkachse (9) jedes Wischers aus einem Zahntrieb (15) besteht.

4. Vorrichtung nach Anspruch 3, **dadurch gekennzeichnet, dass** das biegsame Kabel (11), das das Drehen des Steuerorgans (14) veranlasst, eine Zahnstange (17) aufweist, die fest mit diesem Kabel verbunden ist und in den Zahntrieb (15) eingreift.

5. Vorrichtung nach Anspruch 4, **dadurch gekennzeichnet, dass** die Zahnstange (17) in einer Gleitführung (16), die in dem Stützlager (13) der Schwenkachse (9) des Wischers vorgesehen ist, beweglich ist.

6. Vorrichtung nach einem der Ansprüche 4 oder 5, **dadurch gekennzeichnet, dass** die Zahnstange (17) und der Zahntrieb (15) gerade Zähne (20, 21) aufweisen, die sich senkrecht zu der Längsrichtung des Kabels (11) erstrecken.

7. Vorrichtung nach Anspruch 3, **dadurch gekennzeichnet, dass** das biegsame Kabel (11) in seiner Außenfläche eine kontinuierliche, gezahnte Struktur im Eingriff mit dem Zahntrieb (15) aufweist.

8. Vorrichtung nach Anspruch 7, **dadurch gekennzeichnet, dass** die verzahnte Struktur des Kabels (11) die Form einer kontinuierlichen Spirale mit schraubenartigem Profil oder Kreisevolvente aufweist, die sich um das Kabel wickelt, und wobei der Zahntrieb (15) Zähne mit komplementärem Profil aufweist.

9. Vorrichtung nach einem der Ansprüche 1 oder 2, **dadurch gekennzeichnet, dass** das Steuerorgan (14) der Schwenkachse (9) jedes Wischers aus einer kreisförmigen Scheibe (24) besteht, die eine Umfangshohlkehle (25) aufweist, in der sich das biegsame Kabel (11) aufrollt, wobei das Ende dieses Kabels fest mit einem Verankerungsvorsprung (26) auf der Scheibe verbunden ist.

10. Vorrichtung nach Anspruch 1, **dadurch gekennzeichnet, dass** jeder Verbindungsschwingarm (23) die Form eines schwingenden Schiebers (28) hat, der mit einer Querrille (29) versehen ist, die einen Stift (30) aufnimmt, der fest mit dem Steuerorgan (14) verbunden ist, in Drehung durch das biegsame Kabel (11) angetrieben, wobei dieser schwingende Schieber in Verschiebung in einer stationären Gleitführung (31), die sich senkrecht zu der Richtung der Rille erstreckt und das Schlagen des Steuerorgans (14) um die Schwenkachse (9) des Wischers infolge der Bewegung des Stifts in dieser Rille aufnehmen kann, geführt wird.

11. Vorrichtung nach Anspruch 10, **dadurch gekennzeichnet, dass** die stationäre Gleitführung (31) einen seitlichen Schlitz (34) aufweist, durch welchen das biegsame Kabel (11) durchgeht, um das Steuerorgan (14) in Drehung anzutreiben.
